# EUROPEAN PATENT APPLICATION

(11) **EP 4 815 369 A1**
(43) Date of publication of application: **30.09.2026**
(21) Application number: 26167051.7
(22) Date of filing: 24.03.2026
(51) Int. Cl.: H04L 9/40, H04L 9/32, G06F 21/44

(54) **TARGETED SERVER GROUPS FOR AUTHENTICATION/AUTHORIZATION/ACCOUNTING**

(30) Priority: 27.03.2025 US 202519092957
(71) Applicant: Arista Networks, Inc., Santa Clara, CA 95054 (US)
(72) Inventor: Ukkali, Santosh Shrimant, Santa Clara, CA 95054 (US); Kalyanakrishnan, Ramakrishnan Nurani, Santa Clara, CA 95054 (US); Majumdar, Kaustav, Santa Clara, CA 95054 (US)
(74) Representative: Hoffmann Eitle

(57) **Abstract**

Embodiments include systems and methods for authenticating hosts. Server groups that include authentication servers can be mapped to target supplicants based on, for example, network interface, VLAN, device type or another factor. An authenticator can receive an authentication request from a supplicant, identify that the supplicant is a target supplicant for a server group (e.g., by virtue of connecting to a particular network interface, using a particular VLAN, having particular device type, or being associated with another factor that defines a target set of supplicants for the server group) and authenticate the supplicant using an authentication server from the server group. A network device can thus segregate supplicants for authentication/accounting/authorization with designated server groups.

## Description

### BACKGROUND

Security in computer networks is becoming more critical and complex as networks are increasingly relied upon for communications in a variety of applications and settings. In most network architectures, security on these networks involves the authentication of devices or users using some security mechanism or protocol.

The authentication of such devices is typically accomplished using an authentication protocol, where that authentication protocol is implemented using one or more authentication servers. Generally, a network device acting as an authenticator uses an authentication server to authenticate client devices connected to the network device. More particularly, during an authentication session, a host connected to a port of a network device will attempt to authenticate through the network device. The network device can then send an authentication request (e.g., an access request, etc.) to the authentication server based on the host attempting to authenticate through the network device. The authentication server can then return an authentication response.

Many networks use Remote Authentication Dial-In User Service (RADIUS) for authentication, authorization, and accounting (AAA) services. RADIUS supports media access control (MAC)-based authentication (MBA) that uses the client device's media access control (MAC) address and associated credentials (username and password) for authentication. Each supplicant coupled to a network device that acts as an authenticator authenticates with the network device (e.g., using an Extensible Authentication Protocol (EAP) over LAN (EAPoL) message) before the supplicant can gain access to the network through the port to which it is connected. The network device acts as an authenticator, passing the messages from supplicants through to the RADIUS authentication server and vice versa.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIG. 1A is a diagrammatic representation of a network environment including an embodiment of a network device and servers.
FIG. 1B is a diagrammatic representation of a network environment illustrating an example allocation of server groups to network interfaces.
FIG. 2 is a block diagram depicting a general architecture of one embodiment of a network device.
FIG. 3 is a block diagram of one embodiment of a network system including an embodiment of a network device.
FIG. 4 is a flow diagram for one embodiment of a method for per-port server groups.
FIG. 5 is a flow diagram illustrating one embodiment of a method for session movement.

### DETAILED DESCRIPTION

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure the embodiments in detail. It should be understood, however, that the detailed description and the specific examples are given by way of illustration only and not by way of limitation. Various substitutions, modifications, additions and/or rearrangements within the spirit and/or scope of the underlying inventive concept will become apparent to those skilled in the art from this disclosure.

Currently, EAPoL/MBA supplicants on every interface are authenticated via globally configured RADIUS server groups. There is no mechanism to segregate supplicants with different sets of supplicants getting authenticated through different designated RADIUS server groups. Thus, the authentication process will grant the user the same access regardless of the port of the network device to which the user's device is connected. Setting up a network with device authentication such that, for example, the user is provided with different access when they connect their computer to the network while in one area (e.g., a restricted lab) from when they connect their computer while in another area (e.g., a public conference room), thus requires multiple network devices. The need for multiple network devices to segregate the access granted to a user by the authentication process results in additional network complexity and cost and potential underutilization of network devices.

As another issue, some network devices support movement of sessions across different ports. Since all EAPoL/MBA supplicants on every interface are authenticated via globally configured RADIUS server groups, there is no mechanism to restrict this movement between ports.

What is desired then is improved systems and methods for authenticating devices that allow an authenticator to provide different network access or connection settings to different supplicants. Further, what is desired are mechanisms to selectively restrict session movements between ports.

As alluded to above, security in computer networks is becoming more critical and complex as networks are increasingly relied upon for communications in a variety of applications and settings. In such network architectures, supplicants communicating in a network are connected to network interfaces of a network device, such as an authenticator, which controls the flow of packets in the network. In this disclosure, the term "supplicant" refers to a host device coupled to an authenticator. This authenticator can be an authentication server or appliance, a switch, a router, an access point, or a server configured for controlling access to such networks.

To give an example, one type of networked environment in which network devices may be effectively utilized to control access is referred to as a "campus" environment. A campus network can be thought of as a proprietary local area network (LAN) (or set of interconnected LANs, including a virtual LAN referred to as VLAN) serving a university, corporation, government agency, or other organization or entity. Oftentimes, in these sorts of network environments, users desire to join, or access, the campus network, and do so through a network device in the campus network. For example, users in a conference room or classroom may access a campus network through a wired or wireless interface provided by a network device in the network.

In these types of scenarios, campus (or other types of) networks typically have some form of authentication or validation in place. This authentication can be done using authentication, authorization, and accounting (AAA) server, a widely used standard-based framework for controlling who is permitted to use network resources (through authentication), what they are authorized to do (through authorization), and capturing the actions performed while accessing the network (through accounting). In particular, many of these networks may authenticate host devices according to IEEE 802.1X ("Dot1X"), an authentication protocol to allow access to networks using an authentication server.

Users at host devices may thus access the campus network through a network device (e.g., a router, a switch, an access point, etc.) serving as an authenticator. The network device can authenticate the host device using the authentication server based on credentials provided by the host device and allow, block, or otherwise control network traffic between the host device and the campus network based on the result of the authentication.

Remote Authentication Dial-In User Service (RADIUS) and Diameter, which extends RADIUS, are protocols that can be used by such an 802.1X authenticator to validate a user (through the user's device referred to as an 802.1X supplicant) by communicating with an authentication server (e.g., a AAA server) in an 802.1X topology. It can also be used to validate local authentication attempts. RADIUS and Diameter support MAC-based authentication (MBA) that uses the client device's media access control (MAC) address and associated credentials (username and password) for authentication.

Each supplicant coupled to a network device that acts as an authenticator authenticates with the network device (e.g., using an EAPoL message) before the supplicant can gain authenticated access to the network through the port to which it is connected, where the authenticated access is an access that requires authentications. For example, the supplicant may be blocked from accessing the network prior to authentication but gains partial or full access to the network based on successful authentication. In another example, the supplicant may have limited access to the network prior to authentication, but gains increased access based on successful authentication. The network device can pass messages from supplicants through to the RADIUS authentication server and vice versa. Generally, during an authentication session, the network device sends an authentication request (e.g., an access request, etc.) to the authentication server when a host device is attempting to access the network. The authentication server can then return an authentication response (e.g., an access-accept response, access-reject, access-challenge response, etc.). The authentication response to the network device can indicate whether the host connection is to be allowed or denied. The authentication response may include configuration information (e.g., settings) to be applied to the host connection. To illustrate an example in more detail, when authenticating a supplicant, a network device can generate a RADIUS Access-Request message with several properties describing the supplicant, and with a property wrapping a supplicant's Extensible Authentication Protocol (EAP) message. The server then generates a RADIUS response (which may be a challenge), potentially with a wrapped EAP-response for the supplicant. Based on the result of the authentication, the supplicant may, or may not be, granted an access to the network through the port on which it is connected. For example, the authenticator may block the supplicant's access to the network prior to authentication and allow the supplicant partial or full access to the network based on successful authentication. In another embodiment, the authenticator allows the supplicant limited access to the network prior to authentication and grants the supplicant increased access (partial or full access) based on successful authentication.

Embodiments of the present disclosure allow configuring different server groups (e.g., RADIUS server groups or other server groups) for different target supplicants , where the target supplicants for a server group are defined by the server group selection criterion for that server group. Examples of criterion include, but are not limited to network interface, VLAN, device type (e.g., phone, laptop). The server selection group criterion may include, in some embodiments, a combination of criterion. As an example, in some embodiments a server group may be configured for a combination of VLAN and network interface (e.g., a server group may be configured for supplicants that use VLAN 1 on eth 1, where the server group does not apply to supplicants associated with other VLANs or supplicants connected to other network interfaces). In any case, supporting different server groups for different target supplicants allows an entity implementing a network to segregate supplicants for authentication/accounting/authorization with designated server groups.

More than one server can be assigned to a server group, and more than one server group can be configured for a criterion, which may include a combination of criterions. This can help with failover and failback scenarios. In a scenario in which one server is not available, then the network device will failover/failback to the next server. If no servers in a group are available, the network device can failover to the next server group.

According to one embodiment, a network device can support a logical group that includes all the available servers. This can allow some supplicants to be authenticated through any available authentication server. For example, any supplicants associated with the logical group can be authenticated with any available authentication server.

Once a server group for authentication is configured for target supplicants (e.g., as defined by a server group selection criterion), new supplicants that meet the requirements to be a target supplicant for the server group can be authenticated through the configured server group. In some embodiments, the server groups include AAA servers. As such, once a server group is configured for authentication for a target set of supplicants, new supplicants that meet the criterion to be target supplicants for the server group can perform authentication/authorization/accounting through the configured server group.

According to one embodiment, a global server group is used for supplicants who do not meet the requirements for other server groups. For example, a supplicant that does not meet the requirements to be authenticated by any other configured server group may be authenticated using the global server group.

According to one embodiment, when a server group is configured for target supplicants and there are existing supplicants that meet the criteria to be target supplicants for that server group, but that were previously authenticated using a different server group that no longer applies to the supplicants (e.g., supplicants that were previously authenticated with a global server group), those supplicants can be re-authenticated again so that they are re-connected through the new configuration.

A server group can include multiple authentication servers. According to one embodiment, when authenticating a supplicant using a server group, all the authentication servers in the server group can be tried. If there are no more servers available to be tried, and there are no other applicable authentication server groups, then authentication fails.

As discussed, according to one embodiment, the server group selection criterion comprises the port of the network device to which a supplicant is connected. Thus, embodiments of the present disclosure can provide for per-port server groups that can be configured on ports of a network device. A per-port server group may include authentication servers, authorization servers, or accounting servers.

Embodiments can include configuring RADIUS server groups per interface. This will allow an entity implementing a network to segregate supplicants based on interface for authentication/accounting/authorization with designated RADIUS server groups. A wide variety of configurations are possible. To provide some example configurations, a network environment with three RADIUS servers and a network device having network interfaces Ethernet 1 (Eth 1) and Ethernet 2 (Eth 2) and configured with the following server groups can be considered: a RADIUS server group RG1 configured with RADIUS server 1 (S1), a RADIUS server group RG2 configured with RADIUS server 2 (S2), a RADIUS server group RG3 configured with RADIUS server 3 (S3), a Radius group with all configured RADIUS servers. In one example, Eth 1 is configured with RG1 and RG2, Eth 2 is configured with RG2 and RG3. In this example, RG1(S1) is used for authentication/accounting/authorization with respect to supplicants connecting via Eth 1, with failback to RG2(S2), while RG2(S2) is used for authentication/accounting/authorization with respect to supplicants connecting via Eth 2, with failback to RG3(S3).

In another example, Eth 1 is configured with RG1 and RG2, Eth 2 is configured with RG2 and Radius. In this example, RG1(S1) is used for authentication/accounting/authorization with respect to supplicants connecting via Eth 1, with failback to RG2(S2), while RG2(S2) is used for authentication/accounting/authorization with respect to supplicants connecting via Eth 2, with failback to all configured RADIUS servers.

Embodiments using RADIUS servers can allow entities implementing campus networks to have different RADIUS-based network access control (NAC) systems for different purposes. One example is having one NAC for employee 802.1x/MBA, and a separate NAC for web authentication for guests. As another example, a network device that connects to two different departments can allow each department to have its own 802.1x/MBA authentication source while still sharing the network device.

Some embodiments support restricted session moves between ports. The ability of a supplicant to access a network after moving between ports may be limited based on the per-port server groups configured on the port.

In some embodiments, when a device moves from one network interface to another, the network device can determine if the same server group applies to authenticating the supplicant on the second network interface as was used to authenticate the supplicant on the first network interface. If so reauthentication may be performed using cached information.

For example, if the MAC of a host device is moved from eth 1 to eth 2 and both interfaces have the same server group configured, then re-authentication may be performed using cached connection information If the interfaces are configured with the different server groups, then the network device will re-authenticate using the server group associated with eth 2.

Before describing embodiments in more detail, it may be helpful to an understanding of embodiments to generally discuss the operation of embodiments of such network devices in a network environment, including authentication in such a network environment. It should be noted that while embodiments described and disclosed herein are described and presented with respect to authentication of host devices using the RADIUS protocol, embodiments may be effectively applied in almost any computing context where authentication using remote authentication servers is utilized, and all such embodiments are fully contemplated herein.

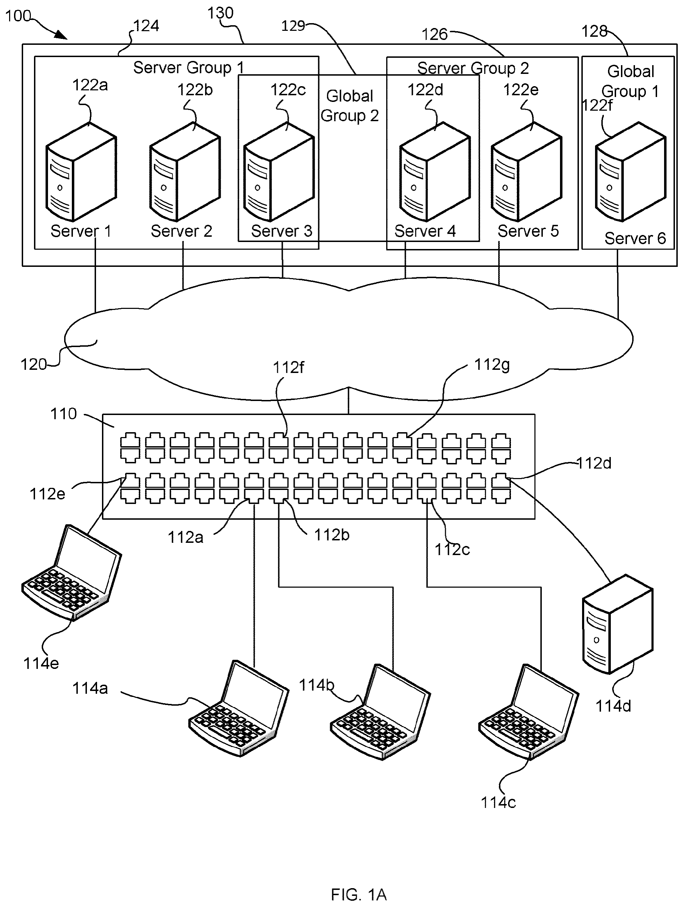

Referring then to FIG. 1A , network environment 100 includes network device 110 (such as a switch or a router) comprising a plurality of network interfaces (ports) 112 (network interfaces 112a, 112b, 112c, 112d, 112e, 112f, 112g are indicated, though network device 110 includes additional interfaces) to which host devices 114 (e.g., host device 114a, host device 114b, host device 114c, host device 114d, host device 114e) are connected (e.g., through a wired or wireless connection) to access network 120. While only five host devices are illustrated, network device 110 may support a large number of network devices connected to network interface 112 including, in some embodiments, host devices connected to the same network interface (e.g., through a gateway or other network device). In some embodiments, host devices 114 include Extensible Authentication Protocol over LAN (EAPoL) supplicants.

Network environment 100 further includes servers 122 (e.g., server 122a, server 122b, server 122c, server 122d, server 122e, server 122f). While six servers are illustrated, a network topology may include more or fewer servers. According to one embodiment, servers 122 are RADIUS servers.

Network device 110 controls the flow of packets from host devices 114 into and out of network device 110 and onto network 120. Embodiments of network device 110 can be usefully applied in certain network environments, such as when network device 110 is utilized as an authenticator in network environment 100. Here, in order to gain an access to network 120, host devices 114 need to be authenticated. Network device 110 serves as an authenticator in network environment 100 to authenticate these host devices 114 using one or more authentication servers and can control network traffic between host devices 114 and network 120 based on the result of the authentication.

Network device 110 can be configured with one or more server groups (e.g., server group 124 ("Server Group 1"), server group 126 ("Server Group 2"), server group 128 ("Global Group 1"), server group 129 ("Global Group 2), server group 130) to which one or more servers 122 are assigned. According to one embodiment, each server group includes at least one authentication server. In some embodiments, a server may be a member of multiple server groups.

According to one embodiment, network device 110 supports targeted server groups that can be targeted at different target sets of supplicants based on server group selection criteria. Examples of targeted server groups include, but are not limited to, per-port server groups, per-VLAN server groups, and per-device type server groups. Global server groups, according to one embodiment, are applied to supplicants to which no targeted server group applies.

Using the example of port as the server group selection criterion, a per-port server group is assigned to one or more designated interfaces (ports) of a network device such that the network device authenticates supplicants on the designated interface with the per-port server group. Thus, a per-port server group is targeted at the supplicants that connect to the designated ports for the per-port server group. Continuing with the example in which port is used as the server group selection criterion, the global server groups can be used to authenticate supplicants connecting to ports on which no other per-port server group is configured.

Network device 110 may support bringing all the authentication servers 122a-122f under one server group 130 (an "All Server Group"). The all_servers group 130 can allow some supplicants to be authenticated through any available authentication server.

The target set of supplicants for a server group, according to one embodiment, is not an explicitly defined group of identified members, but is a logical definition used to determine the supplicants to which the server group applies. A target set of supplicants may be defined, for example, by network interface, VLAN, device type, or other factor associated with supplicants that can allow an entity implementing a network to segregate supplicants to use designated server groups (e.g., for authentication/accounting/authorization with designated server groups). As discussed, a global server group may be used for supplicants that do not meet the requirements for another server group.

In one embodiment, the server groups are mapped to network interfaces such that the target set of supplicants for a server group includes supplicants connecting to the network interface 112 to which the server group is mapped. In other embodiments, the server groups are mapped to device types, such as phone, laptop, etc. For example, a server group mapped to a device type is targeted at supplicants associated with the device type to which the server group is mapped. As another example, server groups may be mapped to VLANs. Thus, for example, a server group mapped to VLAN 1 is targeted at supplicants associated with VLAN 1 and a server group mapped to VLAN 2 is targeted at supplicants associated with VLAN 2. In some embodiments, a server group may be mapped to multiple target sets of supplicants and multiple server groups may be mapped to the same target set of supplicants.

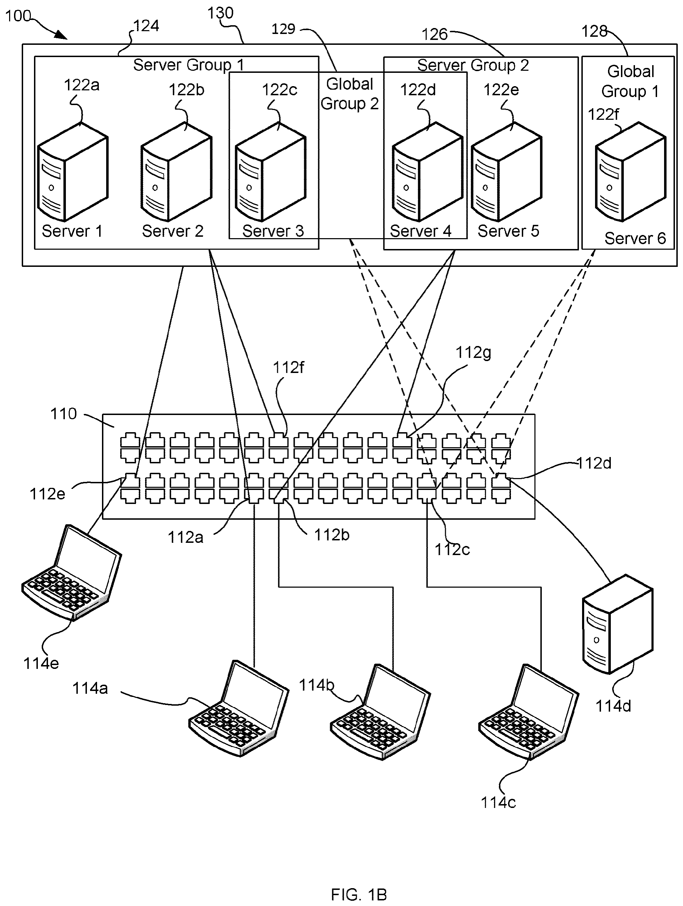

As discussed, server groups may be mapped to network interfaces of network device 110. FIG. 1B is a diagrammatic representation of a network environment illustrating an example assignment of server groups to network interfaces. In the embodiment of FIG. 1B, server group 124 is assigned to network interface 112a and network interface 112f, server group 126 is assigned to network interface 112b and network interface 112g, and server group 130 is assigned to network interface 112e. Network device 110 thus uses servers 122 of server group 124 to authenticate supplicants connected to network interfaces 112a, 112f (e.g., uses server 122a, server 122b, server 122c to authenticate host device 114a) and servers 122 of server group 126 to authenticate supplicants connected to network interfaces 112b, 112g. Server group 130 is assigned to network interface 112e and, thus, network device 110 can authenticate host device 114e through any available server 122a-122f. Global server group 128 and global server group 129 are implicitly assigned to the network interfaces to which no other non-global server group is assigned (e.g., the assignments to network interfaces 112c, 112d are illustrated).

According to one embodiment, once one or more server groups for authentication are configured for a target set of supplicants, new supplicants meeting the server selection criterion for the server groups-that is, new supplicants meeting the criteria to be a target supplicant for the server groups- will be authenticated using the server groups . Using the example of mapping server groups to network interfaces, once one or more server groups for authentication are configured to an interface 112 of network device 110, new supplicants connecting to the interface will be authenticated using the server groups. For example, in FIG. 1B, server group 124 is used to authenticate host device 114a, server group 126 is used to authenticate host device 114b and server group 130 is used to authenticate host device 114e.

According to one embodiment, if a supplicant does not fall within the target set of supplicants for any targeted server group, then a global server group is applied. For example, if per-VLAN server groups are mapped to VLAN 1 and VLAN 2, but no per-VLAN server group is assigned to VLAN 3, then a global server group may be applied to supplicants associated with VLAN3. As another example, if the target supplicants for the server groups are defined based on device type, but a supplicant has a device type to which no server group is explicitly targeted, a global server group can be applied to that supplicant. Using the example of per-port server groups, if no other non-global server group is configured on a network interface 112, then a global server group can be applied to supplicants connecting to that interface. In the example of FIG. 1B, since no other per-port server group is designated for interface 112c or interface 112d, network device 110 thus authenticates host device 114c and host device 114d using global server group 128 or global server group 129.

Generally, during an authentication session for a supplicant, network device 110 sends an authentication request (e.g., an access request, etc.) to an authentication server of a server group for which the supplicant is a target supplicant. Using the example of FIG. 1B, network device 110, during an authentication session for host device 114a, sends an authentication request to an authentication server of server group 124 (e.g., server 122a, server 122b, or server 122c) associated with interface 112a. During an authentication session for host device 114b, network device 110 sends an authentication request to an authentication server of server group 126 (e.g., server 122d or server 122e) associated with interface 112b. During authentication sessions for host device 114c and host device 114d, network device 110 sends authentication requests to an authentication server of global server group 128 (e.g., server 122f) or an authentication server of global server group 129 (e.g., server 122c or server 122d). During an authentication session for host device 114e, network device 110 sends an authentication request to an authentication server of server group 130 (e.g., servers 122a-122f) associated with interface 112e. The relevant authentication server can then return an authentication response (e.g., an access-accept response, access-reject, access-challenge response, etc.).

Using the example of RADIUS servers, when authenticating a host device 114, network device 110 generates a RADIUS Access-Request message with several properties describing that host 114. The authentication server generates a RADIUS response (which may be a challenge), potentially with a wrapped EAP-response for the host. Based on the result of the authentication, the host device 114 may or may not be granted increased access to network 120 through the network interface 112 (port) on which it is connected. For example, network device 110 may block or limit a host device's access to the network prior to the host device 114 authenticating on the network interface 112 to which it is connected but grant increased access (partial or full access) to the network based on successful authentication.

As discussed, a server group may include multiple servers. When authenticating a supplicant using a server group, all the authentication servers in the server group can be tried. If there are no more servers from the server group that remain to be tried, and there are no other applicable server groups that remain to be tried, then authentication fails.

For example, a server group assigned to a network interface may include multiple servers. When authenticating a supplicant from a network interface, all the authentication servers in the server group associated with the network interface can be tried. For example, when authenticating host device 114a, all the servers 122a-122c can be tried (assuming each of servers 122a-122c acts as an authentication server). If there are no more authentication servers in the server group that remain to be tried, and there are no other server groups associated with the network interface that remain to be tried, then authentication fails.

According to one embodiment, when a targeted server group is designated for a target set of supplicants-for example, when a server group is configured for a server group selection criterion-and there are existing supplicants that fall within the target set of supplicants for the server group, where the existing supplicants were authenticated using a global server group or a non-global server group that no longer applies to the supplicants, those supplicants can be re-authenticated again so that they are re-connected through the new configuration

For example, when a per-port server group (e.g., server group 124, server group 126, server group 130) is associated with a network interface 112 and there are existing supplicants on that interface that were authenticated using global server group 128, global server group 129 or a per-port server group no longer associated with the interface, those supplicants can be re-authenticated again so that they are re-connected through the new per-port interface configuration. As an even more particular example, if host device 114b is connected to interface 112b before server group 126 is assigned to interface 112b, network device 110 may initially authenticate host device 114b using global server group 128 or global server group 129. When interface 112b is later configured with server group 126, network device 110 reauthenticates host device 114b using server group 126.

In some embodiments, the servers of a server group are AAA servers. According to one embodiment, once one or more of such server groups of AAA servers are configured to a target set of supplicants, supplicants that are members of the target set of supplicants undergo authentication/authorization/accounting through the configured server groups. Using an example of per-port server groups, once one or more per-port server groups of AAA servers are configured to a network interface 112 of a network device 110, supplicants connecting to the interface will perform authentication/authorization/accounting through the configured server groups for that interface. If, for example, the servers of server group 124 and server group 126 include AAA servers, host device 114a will perform authentication/authorization/accounting using server group 124, host device 114b will perform authentication/authorization/accounting using server group 126, and so on.

In some embodiments, network device 110 supports a session move feature in which a host device can move across different ports. Typically, when a host device moves between different ports of an authenticator, the existing session of the host device on the original port is cleaned up and the already authenticated credentials are not saved. Consequently, the authenticator has to perform a fresh authentication on the new port using an authentication server. As described in United States Patent Publication 2024/0380753, entitled "Faster Movement of 802.1X Supplicants Using Cache," filed May 8, 2023, which is incorporated by reference herein, an authenticator may leverage a cache of session attributes to allow the host device to reuse the authenticated credentials from the original port on the new port. This can help the host device get immediate access to the network through the authenticator, without having to wait for a new authentication with an authentication server to be completed.

The use of a cache as described in United States Patent Publication 2024/0380753, entitled "Faster Movement of 802.1X Supplicants Using Cache," can work in an environment in which all ports use the same authentication servers, such as when EAPoL/MBA supplicants on every interface are authenticated via the same globally configured RADIUS server group. However, a technical problem exists with the use of cached attributes when different authentication servers are used across ports because the supplicant may not have the same rights on the new port as the previous port. For example, host device 114b may not have the same rights if moved from network interface 112b to network interface 112f. Authenticators according to the present disclosure can support restricted movement across ports to allow the reuse of authenticated attributes while accounting for the potential use of different authentication servers across ports.

When an authenticator, such as network device 110, authenticates a supplicant for a session on a network interface, the authentication process produces attributes for the session as authenticated for the supplicant on that network interface. An authenticator, such as network device 110, can include a cache to allow the authenticator to reuse attributes from a session on one port for authenticating the supplicant on another port. When a supplicant moves from one network interface to another, the authenticator (e.g., network device 110) can determine whether cached attributes from a session on the first network interface can be used to authenticate the supplicant on the new network interface. For example, if host device 114a is authenticated on network interface 112a and then the MAC of host device 114a moves to network interface 112f, network device 110 can determine if cached session attributes for the session on network interface 112a as authenticated for host device 114a on network interface 112a can be reused on network interface 112f.

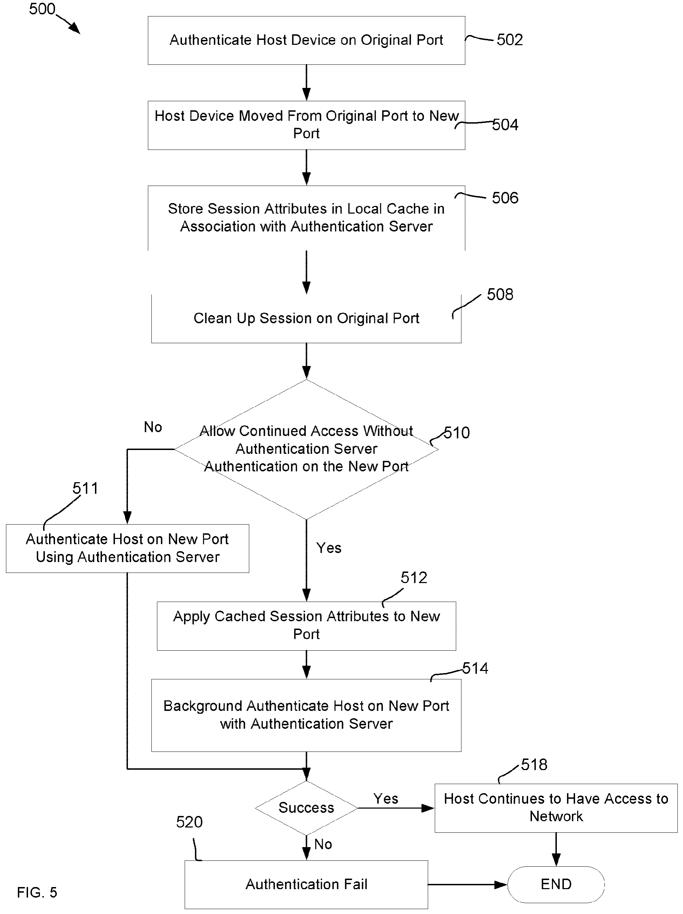

The determination of whether the cached attributes from the session on the first network interface can be reused may be based on a variety of factors such as, but not limited to, the authentication the server used to authenticate the host device on the first network interface, the server group used to authenticate the host device on the first network interface, the authentication servers associated with the first network interface and the second network interface, and the server groups associated with the network interfaces and the second network interface. Some examples of determining whether the cached attributes from the session on the first network interface can be reused are discussed in conjunction with FIG. 5.

If the authenticator determines that the cached attributes can be reused, the authenticator applies the cached session attributes from the session on the first network interface as authenticated for the supplicant on the first network interface, leading to successful authentication of the supplicant on the second network interface without having to communicate with an authentication server. For example, if network device 110 determines that the cached session attributes for the session on network interface 112a as authenticated for host device 114a on network interface 112a can be reused on network interface 112f, network device 110 uses the cached attributes to reauthenticate host device 114a on network interface 112f.

If the authenticator determines that the cached attributes should not be reused, the authenticator authenticates the supplicant using an authentication server from an appropriate authentication group. For example, if network device 110 determines that the cached session attributes for the session on network interface 112a as authenticated for host device 114a on network interface 112a should not be reused on network interface 112f, network device 110 reauthenticates host device 112a using a server group for network interface 112f. Several example embodiments of determining whether to use cached attributes from a session on one network interface to authenticate a host device on a second network interface are discussed below in conjunction with FIG. 5.

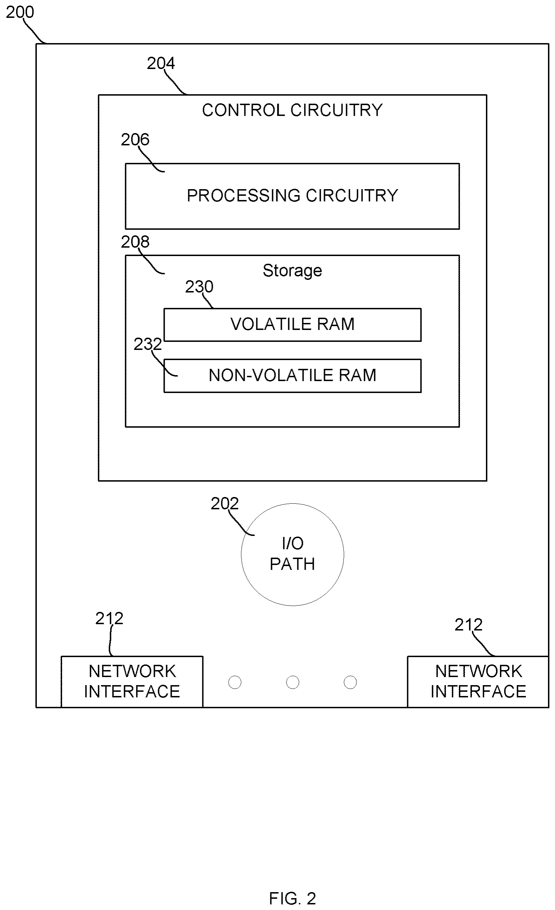

FIG. 2 is a block diagram depicting a general architecture of a network device 200. Network device 200 may serve as an authenticator, implementing on an authentication server, an authentication appliance, a router, a switch, an access point, a server, or any other computing device that may be configured to control or process network traffic, including authenticating a supplicant.

Network device 200 may receive data, including packets from host devices (not shown in FIG. 2 ), via an input/output (I/O) path 202. I/O path 202 may provide packet data to control circuitry 204, which includes processing circuitry 206 and storage 208. Control circuitry 204 may send and receive commands, requests, and other suitable data using I/O path 202. I/O path 202 may connect control circuitry 204 (and specifically processing circuitry 206) to one or more network interfaces 212 to which other devices of a network (e.g., host devices) can be connected. These network interfaces 212 may be any type of network interface, such as an RJ45 ethernet port, a coaxial port, etc.

Control circuitry 204 includes processing circuitry 206 and storage 208. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, octa-core, or any suitable number of cores). In some embodiments, processing circuitry 206 is distributed across multiple separate processors or processing units, for example, multiple of the same type of processing units (e.g., two INTEL CORE i7 processors) or multiple different processors (e.g., an INTEL CORE i5 processor and an INTEL CORE i7 processor). The circuitry described herein may execute instructions included in software running on one or more general purpose or specialized processors.

Storage 208 may be an electronic storage device that includes volatile random-access memory (RAM) 230, which does not retain its contents when power is turned off, and non-volatile RAM 232, which does retain its contents when power is turned off. As referred to herein, the phrase "electronic storage device" or "storage device" should be understood to mean any device for storing electronic data, computer software, instructions, or firmware, such as RAM, content-addressable memory (CAM) (including a TCAM), hard drives, optical drives, solid state devices, quantum storage devices, or any other suitable fixed or removable storage devices, or any combination of the same.

According to embodiments, server group definitions and mappings of server groups to server selection criteria may be stored in storage 208. According to even more particular embodiments, server group definitions and assignments of server groups to interfaces may be stored in storage 208. In some embodiments, session attributes for sessions are stored in storage 208. Session attributes for a session may include authenticated attributes for a supplicant and the server used to authenticate the supplicant for the session on a network interface 212.

Control circuitry 204 executes instructions for implementing authentication using server groups. For example, when authenticating a supplicant connected to a network interface 212, the control circuitry 204 may determine a server group associated with the network interface and authenticate the supplicant using the associated server group. As another example, when authenticating a supplicant associated with a VLAN, control circuitry 204 may determine the server group associated with the VLAN and authenticate the supplicant using the associated server group. As yet another example, when authenticating a supplicant having an associated device type control circuitry 204 may determine a server group associated with that device type and authenticate the supplicant using the associated server group.

In some embodiments, when control circuitry 204 detects that a supplicant has connected to an interface, control circuitry determines 204 if there are live (non-expired) authenticated session attributes for the supplicant from a session on another interface and if the session attributes can be reused. If control circuitry 204 determines that the session attributes can be reused, control circuitry 204 uses the existing authenticated attributes to authenticate the supplicant on the new interface. If live authenticated session attributes from a prior interface are not available for the supplicant or the session attributes should not be reused, control circuitry 204 may reauthenticate the supplicant with a server group associated with the current network interface to which the supplicant is connected.

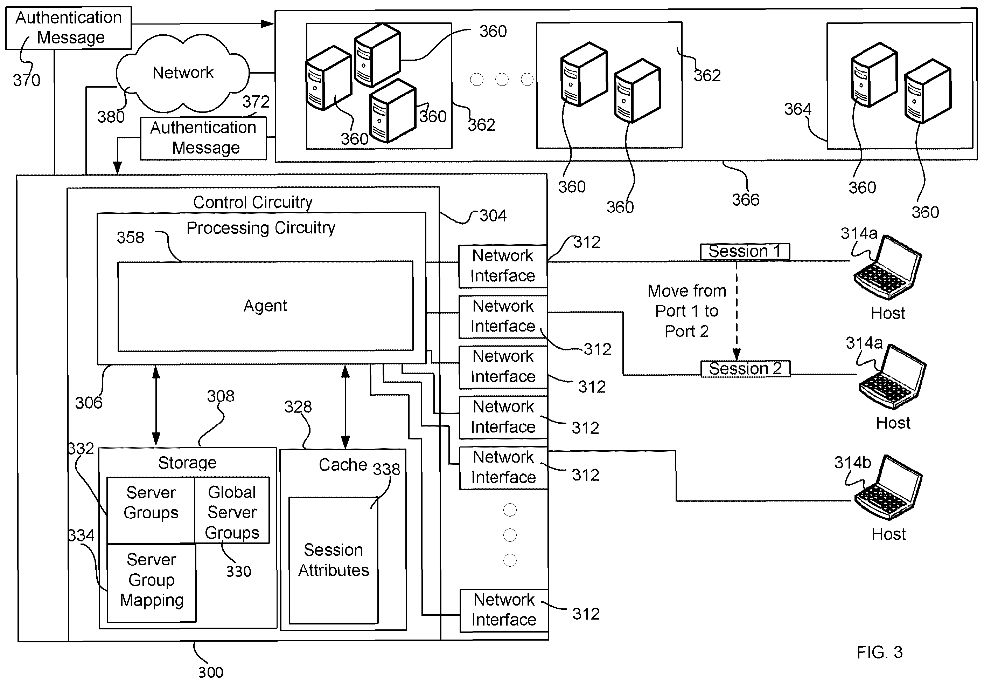

FIG. 3 is a more detailed depiction of an embodiment of a network system including a network device 300 and servers 360. Servers 360 may include RADIUS servers or the like configured to receive authentication messages (e.g., authentication requests or the like) from network device 300 and return authentication messages (e.g., authentication responses or the like). In some embodiments, servers 360 include AAA servers that receive authorization messages (authorization requests or the like) and accounting messages and return authorization messages (authorization responses or the like) and accounting messages.

Network device 300 may receive data, including packets from host devices 314 (e.g., host device 314a, host device 314b) via I/O paths that provide packet data to control circuitry 304, which includes processing circuitry 306 and storage 308 (i.e., memory). I/O paths may connect control circuitry 304 (and specifically processing circuitry 306) to one or more network interfaces 312 to which other devices of a network (e.g., host devices) can be connected. These network interfaces 312 may be any type of network interface, such as an RJ45 ethernet port, a coaxial port, etc.

Control circuitry 304 includes processing circuitry 306 and storage 308. In some embodiments, processing circuitry 306 is distributed across multiple separate processors or processing units, for example, multiple of the same type of processing units. Processing circuitry 306 may execute instructions included in software on one or more general purpose or specialized processors.

Storage 308 may include volatile random-access memory, non-volatile memory, or combination thereof. Storage 308 further stores global server group definitions 330 that define one or more global server groups 364 and other server group definitions 332 that define non-global server groups (e.g., server groups 362, server group 366).

Network device 300 may support bringing all the authentication servers 360 under one logical group 366 (an "all_servers" group). The all_servers group 366, which may be considered a special server group, can allow some supplicants to be authenticated through any available authentication server..

Storage 308 further includes a mapping 334 of server groups (e.g., server groups 362 and all server group 366, if defined) to server group selection criteria that define the target set of supplicants for the server groups (e.g., according to VLAN, device type, or other factor). Thus, server groups 362 and all server group 366 are targeted server groups that each apply to a respective target set of supplicants. Multiple server groups may be mapped to the same target set of supplicants. For example, multiple server groups may map to the same port, VLAN, device type, or other factors or combinations thereof. Global server group 364 may be applied to supplicants who do not fall within the target set of supplicants of any of the server groups 362 or server group 366.

According to one embodiment, for example, mapping 334 maps server groups (e.g., server groups 362, server group 366) to network interfaces 312. Server groups 362 and all server group 366 may be mapped to one or more interfaces 312 and an interface 312 may be configured with multiple per-port server groups. Interfaces 312 not otherwise configured with a server group 362 or all server group 366 are configured with global server group 364.

According to one embodiment, the global server group definitions 330, server group definitions 332 and mappings 334 of server groups to target sets of supplicants (e.g., mapping to VLANS, device types, network interfaces) may be established by an administrator or other type of user through an interface such as a command line interface (CLI) or the like. In some embodiments, one or more server groups are system defined server groups. By way of example, but not limitation, all_servers group 366 may be a system created server group.

Network device 300 serves as an authenticator in the networked environment. Specifically, an agent 358 (e.g., an authentication agent) may be configured to authenticate host devices 314 using authentication servers 360 based on credentials provided by host devices 314 such that network device 300 can allow, block, or otherwise control network traffic between the host devices 314 and network 380 based on the result of the authentication. Agent 358 may be implemented in hardware, software, or any suitable combination of hardware and software (e.g., in control circuitry 304). For example, agent 358 may be a software program stored on storage 308 (e.g., non-volatile RAM) and executed by processing circuitry 306.

During an authentication of a host 314 by network device 300, agent 358 determines one or more server groups (a server group 362, all server group 366, a global server group 364) having a target set of supplicants to which the host belongs and sends an authentication message 370 (e.g., an authentication or access request, a challenge request, etc.) to one or more authentication servers of the server group. For example, in an implementation using server groups assigned to network interfaces, agent 358 determines one or more server groups (a server group 362, all server group 366, global server group 364) assigned to the network interface 312 to which the host device 314 is connected and sends an authentication message 370 (e.g., an authentication or access request, a challenge request, etc.) to one or more authentication servers of the server group.

A server 360 acting as an authentication server can then return an authentication message 372 (e.g., an access-accept response, access-reject, access-challenge response, etc.). To illustrate in more detail using RADIUS, when authenticating host 314a, agent 358 can generate a RADIUS Access-Request message with several properties describing the supplicant (i.e., host device 314a), and with a property wrapping a host's 314a EAP message. A server 360 acting as an authentication server then generates a RADIUS response (which may be a challenge), potentially with a wrapped EAP-response for the host 314a.

These RADIUS messages may have authentication fields (e.g., the Request/Response Authenticator and the Message-Authenticator attribute). The values for these authentication fields may be generated and verified (authenticated) using a secret key (value) shared between the network device 300 and the authentication server 360. Specifically, the shared key is appended to the contents of a message and the result hashed to produce the value for the authenticator field. The RADIUS messages may then be authenticated by the network device 300 or authentication server 360 using the shared key.

According to one embodiment, agent 358 and servers 360 may use rotating keys to validate messages as described, for example, in United States Patent Publication 2024/0380753, entitled "Faster Movement of 802.1X Supplicants Using Cache," filed May 8, 2023, which is hereby fully incorporated by reference herein.

In any case, when authenticating a supplicant, agent 358 may try all the authentication servers in the server group selected to authenticate the supplicant based on the server group selection criterion. For example, when authenticating a supplicant on an interface, agent 358 may try all the authentication servers in a server group configured on the interface. If there are no more servers available to be tried, and there are no other server groups configured for the same target set of supplicants to which the supplicant belongs, then authentication fails.

As discussed, in some embodiments, the server groups include AAA servers. Thus, once one or more server groups of AAA servers are configured for a target set of supplicants, supplicants in the target set of supplicants can perform authentication/authorization/accounting through the configured server groups. For example, once one or more server groups of AAA servers are configured to an interface, supplicants connecting on that interface can perform authentication/authorization/accounting through the configured server groups assigned to the interface.

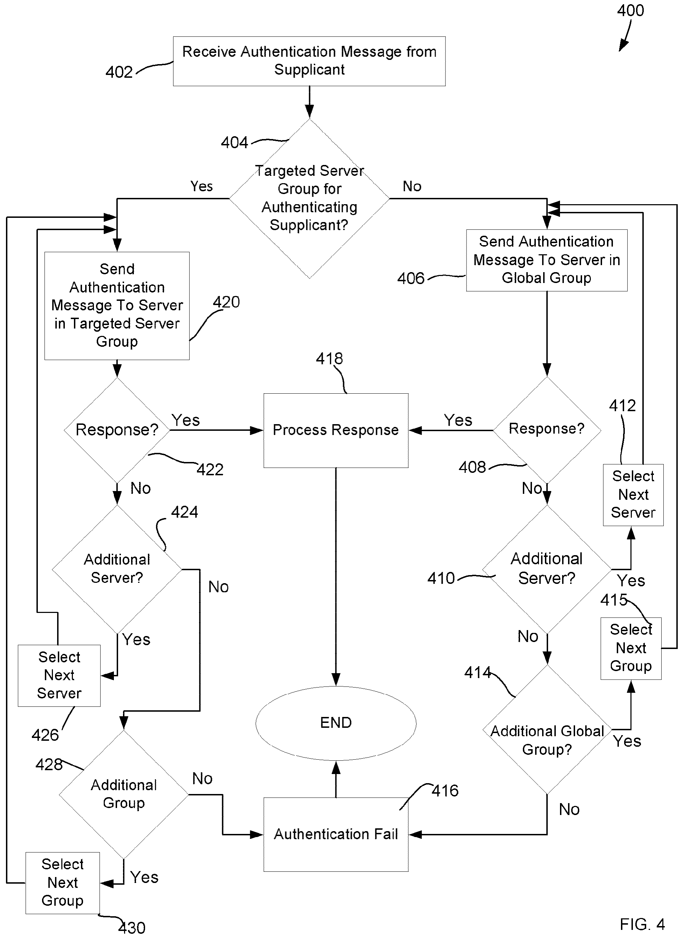

Network device 300 may include an operating system that supports a session move feature in which a Dot1X-capable host device can move across different ports (e.g., host device 314a moves from Port 1 to Port 2, as shown in FIG. 3 ). According to one embodiment, network device 300 includes a cache 328 for caching session attributes 338 for authenticated sessions. The session attributes 338 for a session on one port may be used, in some cases, to reauthenticate a host on another port. For example, when host device 314a moves from Port 1 to Port 2, the session attributes for "Session 1" as authenticated for host device 314a on Port 1 of network device 300 may be used for "Session 2" to reauthenticate host device 314a on Port 2. FIG. 4 shows one embodiment of a method 400 for authentication using server groups. In one embodiment, the steps of method 400 may be implemented by software executed by a processor, such as by agent 358.

At step 402, an authentication message is received by the authenticator from a supplicant connected to a network interface (port) of the authenticator.

At step 404, the authenticator determines if the supplicant is in the target set of supplicants for a targeted server group. For example, the authenticator determines if the supplicant meets a server group selection criterion for a targeted server group. If the supplicant is not in the target set of supplicants for a targeted server group control passes to step 406.

Using an example of per-VLAN server groups in which server groups are configured on VLANs, the authenticator determines if a per-VLAN server group is assigned to a VLAN used by the supplicant (step 404). If a per-VLAN server group is not assigned to the VLAN used by the supplicant control passes to step 406.

Using an example of per-device type server groups in which server groups are configured on device types, the authenticator determines if a per-device type server group is assigned to the device type of the supplicant (step 404). If a per-device type server group is not assigned to the device type of the supplicant, control passes to step 406.

Using the example of per-port server groups configured on network interfaces, the authenticator determines if a per-port server group is configured on the interface to which the supplicant is connected (step 404). For example, if the supplicant is connected to eth 1 of the authenticator, the authenticator determines if a per-port server group is configured on eth 1. If no per-port server group is configured on the network interface to which the supplicant is connected, control passes to step 406.

At step 406, the authenticator selects an authentication server from a global server group and sends that authentication message to the server. If the authentication server does not respond in a threshold amount of time, as determined at step 408, the authenticator, at step 410, determines if there is another server in the global server group that has not been tried. If there is an authentication server in the global server group that has not been tried, the authenticator, at step 412, selects the next authentication server from the global server group and sends the authentication message to the selected server (step 406).

If there is no remaining authentication server in the global server group to be tried, the authenticator, at step 414, determines if there is another global server group to be tried. If there is another global server group to be tried, the authenticator, at step 415, selects the next global server group to try and sends the authentication message to an authentication server in the selected server group (step 406).

If there are no more authentication servers in the global server group available to be tried and there are no more global server groups to be tried, then authentication fails and the network device implements authentication failed processing (step 416). According to one embodiment, the authenticator blocks or otherwise limits access to the network.

If an authentication server from a global server group returns an authentication response, the authenticator processes the authentication response (step 418). According to one embodiment, the authenticator forwards the response to the supplicant. Depending on the response, the authenticator may allow, block, or otherwise control network traffic between the supplicant and a network based on the result of the authentication.

Returning to step 404, if the supplicant is in the target set of supplicants for a targeted server group, the authenticator selects an authentication server from an applicable server group and sends the authentication message to the authentication server (step 420).

Using an example of per-VLAN server groups, if a per-VLAN server group is assigned to the VLAN used by the supplicant, the authenticator selects an authentication server from a server group assigned to the VLAN and sends the authentication message to the authentication server (step 420).

Using an example of per-device type server groups, if a per-device type server group is assigned to the device type of the supplicant, the authenticator selects an authentication server from a server group assigned to device type and sends the authentication message to the authentication server (step 420).

Using the example of per-port server groups configured on network interfaces, if a per-port server group is configured on the network interface to which the supplicant is connected, the authenticator selects an authentication server from a per-port server group configured on the interface and sends that authentication message to the server (step 420). For example, if the supplicant is connected to eth 1 of the authenticator and there is a per-port server group configured on eth 1, the authenticator selects an authentication server from a per-port server group configured on eth 1 and sends the authentication message to the authentication server.

If the authentication server does not respond in a threshold amount of time, as determined at step 422, the authenticator, at step 424, determines if there is another authentication server in the server group (e.g., the per-VLAN server group, per-device type server group, per-port server group) that has not been tried. If there is an authentication server in the server group that has not been tried, the authenticator, at step 426, selects the next authentication server from the server group and sends the authentication message to the selected server (step 420).

If there is no remaining authentication server in the server group that has not been tried, the authenticator, at step 428, determines if there is another targeted server group for which the supplicant is in the target set of supplicants . For example, the authenticator determines if there is another server group assigned to the VLAN, device type, or network interface. If there is another server group that has not been tried, the authenticator, at step 430, selects the next server group to try and sends the authentication message to an authentication server in the selected server group (step 420). If there are no more authentication servers in a server group available to be tried, and there are no remaining targeted server groups to be tried for authenticating the supplicant, then authentication fails and the authenticator implements authentication failed processing (step 416). According to one embodiment, the authenticator blocks or otherwise limits access to the network.

If an authentication server returns an authentication response, the authenticator processes the authentication response (step 418). For example, if the supplicant is connected to eth 1 and an authentication server from a per-port server group configured on eth 1 returns an authentication response, the authenticator processes the authentication response (step 418). According to one embodiment, the authenticator forwards the response to the supplicant. Depending on the response, the authenticator may allow, block, or otherwise control network traffic between the supplicant and a network based on the result of the authentication.

FIG. 4 is merely illustrative and the disclosed subject matter is not limited to the ordering or number of steps illustrated. Embodiments may implement additional steps or alternative steps, omit steps, or repeat steps. For example, steps may be repeated for each question in the evaluation form.

FIG. 5 shows one embodiment of a method 500 for authenticating a host device moving between ports. In one embodiment, the steps of method 500 are implemented by software executed by processor, such as by agent 358.

At step 502, an authenticator authenticates a host device on an original port of the authenticator in an original session (e.g., Session 1) using an authentication server of a server group . For example, network device 110 authenticates host device 114a on network interface 112a using an authentication of server group 124. As another example, network device 300 authenticates host device 314a on Port 1.

In some embodiments, the authenticator tracks server information for the session on the original port where the server information for the session on the original port identifies at one of the server groups or the authentication server that was used to authenticate the host for the session on the original port. For example, network device 110 may track that host device 114a was authenticated on network interface 112a by server group 124 ("Server Group 1") and that host device 114a was authenticated by server 122a ("Server 1"). As another example, network device 300 may track which server group or authentication server 360 was used to authenticate host device 314a on Port 1.

At step 504, the authenticator detects or learns (e.g., notified by the network interface coupled to the control circuitry of the authenticator) that the host device (e.g., host device 114a, host device 314a) has moved from the original port (e.g., network interface 112a, Port 1) to a new port (e.g., network interface 112f, Port 2).

At step 506, the authenticator stores or otherwise saves the authenticated attributes from the original port in a cache local to the authenticator. For example, network device 300 stores the authenticated session attributes 338 for Session 1 as authenticated for host device 314a on Port 1 in cache 328.

In some embodiments, the authenticator tracks server information for the session on the original port (e.g., server information for Session 1) where the server information for the session on the original port identifies at one of the server group or the authentication server that was used to authenticate the host for the session on the original port. For example, network device 110 may track that host device 114a was authenticated on network interface 112a by server group 124 ("Server Group 1") and that host device 114a was authenticated by server 122a ("Server 1"). As another example, network device 300 may track which server group or authentication server 360 was used to authenticate host device 314a on Port 1. The server information for a session may be stored in cache 328 in association with the authenticated session attributes or elsewhere.

At step 508, the authenticator cleans up the session on the original port.

At step 510, the authenticator determines to allow the host device continued access to the network without requiring authentication server authentication on the new port to allow the continued access. In one embodiment, the authenticator determines whether cached session attributes from the session on the original port can be used to authenticate the host device on the new port. If the authenticator determines authentication server authentication of the host device is required on the new port-for example, if the authenticator determines that the cached session attributes from the session on the original port should not be reused-the authenticator, at step 511, authenticates the host device with an authentication server assigned to the new port before allowing the host device the continued access to the network. The host device's access to the network may thus be disrupted or degraded until an authentication server authenticates the host device on the new port.

If the authenticator determines to allow the host device continued access to the network without requiring authentication server authentication on the new port, the authenticator allows the host device the continued access to the network without requiring authentication server authentication on the new port. For example, if the authenticator determines that the cached attributes for a session on the original port can be used on the new port, the authenticator, at step 512, applies the cached session attributes for the session for the host device as authenticated on the original port on the new port, leading to a successful authentication of the host device on the new port without having to communicate with the authentication server. Thus, the host device's continued access to the network is not interrupted or degraded waiting for authentication by the authentication server.

In one embodiment, the authenticator, at step 510, determines if the same set of server groups is configured on the original port and the new port. If the same set of server groups is not configured on the original port and the new port, the authenticator, at step 511, authenticates the host device with an authentication server of a server group assigned to the new port. If the same set of server groups is configured on the original port and the new port, the authenticator, at step 512, applies the cached session attributes for the session as authenticated for the host device on the original port to the new port to authenticate the host device on the new port.

Using the example of FIG. 1B, if host device 114a is authenticated on network interface 112a and then moves to network interface 112f, network device 110, at step 510, determines that the same set of server groups is configured on network interface 112a and network interface 112f and, at step 512, applies the cached session attributes for the session as authenticated for host device 114a on network interface 112a to authenticate host device 114a on network interface 112f. If, however, host device 114a moves from network interface 112a to network interface 112g, which is not configured with the same set of server groups as network interface 112a, network device 110, at step 511, authenticates host device 114a on network interface 112g using an authentication server of server group 126 ("Server Group 2").

As another example, when network device 300 receives an indication that host device 314a has moved from Port 1 to Port 2, network device 300, at step 510, determines if Port 2 is configured with the same server groups as Port 1 (e.g., from mappings 334). If Port 2 is not configured with the same server groups as Port 1, network device 300, at step 511, authenticates host device 314a using a server group mapped to Port 3. If Port 2 is configured with the same server groups as Port 1, network device 300, at step 512, applies the cached session attributes 338 for Session 1 as authenticated for host device 314a on Port 1 to authenticate host device 314a on Port 2.

In another embodiment, the authenticator, at step 510, determines if the same server group that was used to authenticate the host for the session on the original port is configured on the new port. If the same server group that was used to authenticate the host on the original port is not configured on the new port, the authenticator, at step 511, authenticates the host device with an authentication server of a server group assigned to the new port. If the same server group that was used to authenticate the host on the original port is configured on the new port the authenticator, at step 512 applies the cached session attributes for the session as authenticated for the host on the original port to the new port to authenticate the host device on the new port. Thus, in some embodiments, the cached session variables for the session as authenticated on the original port may be used on the new port when the same server group that was used to authenticate the host on the original port is configured on the new port, even if the overall sets of server groups configured on the original port is different from the overall set of server groups configured on the new port.

As an example, network device 300 may track the server group that authenticated host device 314a on Port 1 (for example, as part of the cached data for the session or otherwise). When network device 300 receives an indication that host device 314a has moved from Port 1 to Port 2, network device 300 determines, at step 510, if Port 2 is configured with the server group that authenticated the host device 314a on Port 1. If Port 2 is not configured with the server group that was used to authenticate host device 314a on Port 1, network device 300, at step 511, authenticates host device 314a with a server group for Port 2. If Port 2 is configured with the server group that was used to authenticate host device 314a on Port 1, network device 300, at step 512, applies the cached session attributes 338 for Session 1 as authenticated for host device 314a on Port 1 to authenticate host device 314a on Port 2.

In another embodiment, the authenticator, at step 510, determines if the same set of servers is configured on the original port and the new port. If the same set of servers is not configured on the original port and the new port, the authenticator, at step 511, authenticates the host device with an authentication server of a server group assigned to the new port. If the same set of servers is configured on the original port and the new port, the authenticator, at step 512, applies the cached session attributes for the session as authenticated for the host device on the original port to the new port to authenticate the host device on the new port.

For example, when network device 300 receives an indication that host device 314a has moved from Port 1 to Port 2, network device 300, at step 510, determines if Port 2 is configured with the same set of server groups as Port 1 (e.g., using mappings 334 and the server group definitions). If Port 2 is not configured with the same set of servers as Port 1, network device 300, at step 511, authenticates host device 314a using a server group mapped to Port 2. If Port 2 is configured with the same set of servers as Port 1, network device 300, at step 512, applies the cached session attributes 338 for Session 1 as authenticated for host device 314a on Port 1 to authenticate host device 314a on Port 2.

Thus, in some embodiments, the authenticator reuses session variables for the session as authenticated on the original port to authenticate the host on the new port, when the set of servers assigned to the original port and the new port are the same, even if the server groups assigned to the ports are different.

In another embodiment, the authenticator, at step 510, determines if the same server that was used to authenticate the host for the session on the original port is configured on the new port. If the same server that was used to authenticate the host for the session on the original port is not configured on the new port, the authenticator, at step 511, authenticates the host device with an authentication server assigned to the new port. For example, the authenticator authenticates the host device using a server group configured on the new port. If the same server that was used to authenticate the host for the session on the original port is configured on the new port, the authenticator, at step 512, applies the cached session attributes for the session as authenticated for the host on the original port to the new port to authenticate the host device on the new port.

For example, network device 300 may track the authentication server 360 that authenticated host 314a for Session 1 on Port 1. When network device 300 receives an indication that host 314a has moved from Port 1 to Port 2, network device 300, at step 512, determines if Port 2 is configured with a server group that includes the server 360 that was used to authenticate host device 314a on Port 1 for Session 1 (e.g., according to mapping 334 and the server group definitions). If the server that was used to authenticate host 314a for Session 1 on Port 1 is not configured on Port 2-for example, if no server group configured on Port 2 includes the server that was used to authenticate host 314a for Session 1 on Port 1, network device 300, at step 511, authenticates the host device with an authentication server from a server group assigned to the new port. If Port 2 is configured with a server group that includes the server used to authenticate host 314a on Port 1 for Session 1, network device 300, at step 512, applies the cached session attributes 338 for Session 1 as authenticated for host device 314a on Port 1 to authenticate host device 314a on Port 2.

Thus, in some embodiments, the authenticator reuses session variables for the session as authenticated on the original port to authenticate the host on the new port when the server that was used to authenticate the host device on the original port is assigned to the second port, even if the overall sets of servers assigned to the ports are different.

In some embodiments, the authenticator allows the host device the continued access to the network without requiring authenticator server authentication of the host device on the new port to allow the continued access while also authenticating the host device on the new port with an authentication server, which may result in terminating the continued access. In the background, the authenticator, at step 514, starts an authentication process for the host device on the new port using a server group applicable to the new port. For example, if host device 114a moves from network interface 112a to network interface 112f, network device 110, at step 512, can allow host device 114a continued access to network 120 without requiring authentication server authentication of host device 114a on network interface 112f while also implementing, at step 514, an authentication process with an authentication server of server group 124 (Server Group 1) to authenticate host device 112a on network interface 112f. As another example, network device 300, at step 512, may allow host device 314a continued access on Port 2 while, at step 514, implementing an authentication process with an authentication server from a server group assigned to Port 2 to authenticate host 314a. This authentication process does not disrupt the existing authenticated state of the host device on the new port.

Authentication at step 511 or step 514 may be performed by trying one or more servers of one or more server groups as described, for example, in conjunction with FIG. 4. If the authentication from step 511 or step 514) succeeds, the host device continues to have authenticated access to the network (step 518). Otherwise, the authenticator implements authentication failed processing (step 520). According to one embodiment, if the host device fails the authentication, the authenticator denies or otherwise limits the host device's network access through the new port.

A host device moving from one session to another can pose a security risk. For this reason, it may be desirable to authenticate a host device that has moved ports even in cases where the authenticator applies cached session attributes on the new port. According to one embodiment, the authenticator, at step 514, performs a fresh authentication for the host with an authentication server assigned to the new port. The fresh authentication can be performed at the background (step 514) to minimize the risk. If this background authentication fails, the host device's session through the new port is terminated immediately.

FIG. 5 is merely illustrative and the disclosed subject matter is not limited to the ordering or number of steps illustrated. Embodiments may implement additional steps or alternative steps, omit steps, or repeat steps. For example, steps may be repeated for each question in the evaluation form.

A session move method may include authenticating, by an authentication agent on an authentication appliance, a host device such as an EAPoL supplicant for a first session on a first network interface (e.g., an original port) of the authentication appliance, the authenticating producing session attributes for the first session as authenticated for the host device on the first network interface. In some embodiments, the authentication appliance comprises a switch, a router, an access point, or a server computer that controls a flow of packets in a computer network. In some embodiments, the host device is one of a plurality of host devices connected to the authentication appliance. In some embodiments, the original port is a physical port such as an RJ45 ethernet port or a coaxial port.

In some embodiments, the session move method may further include receiving, an authentication agent running on the authentication appliance an indication that the host device (e.g., a smart phone, a laptop computer, a mobile device, etc.) has moved from the first network interface to start a second session on a second network interface (e.g., a new port) of the authentication appliance. Before any packet is processed, the authentication agent may store or otherwise save, in a cache local to the authentication agent, the session attributes for the first session as authenticated for the host device on the first network interface. In some embodiments, the authentication appliance tracks the server group or server that was used to authenticate the host device on the first network interface.

In some embodiments, the cached session attributes can include at least one of an attribute for indicating reauthentication behavior of the host device, an attribute for indicating a session timeout, an attribute for indicating an idle timeout, an attribute for identifying a VLAN, an attribute for indicating an ACL name, an attribute for indicating a Web authentication status, an attribute for indicating a RADIUS class, an attribute for indicating a type of service requested by the host device, an attribute for indicating an Internet Protocol (IP) address of the host device, an attribute for indicating a captive portal universal resource locator (URL), an attribute for indicating a source from where a captive portal URL is obtained, or an attribute for indicating a device type of the host device. In some embodiments, the authentication agent cleans up the first session on the first network interface.

The authentication agent determines whether to allow the host device continued access to the network without requiring authentication server authentication of the host on the network interface to which the host has moved to allow the continued access. For example, the authentication agent determines whether to use cached session attributes from the session on the first network interface to authenticate the host device on the network interface to which the host has moved. According to one embodiment, the authentication agent determines to use the cached session attributes based on one or more of the following: the network interface to which the host has moved being configured with the same set of server groups as the first network interface, the network interface to which the host has moved being configured with the same set of servers as the first network interface, the network interface to which the host has moved being configured with the server group that was used to authenticate the host device on the first network interface, or the network interface to which the host has moved being configured with the same server that was used to authenticate the host device on the first network interface.

If the authentication agent determines to use the cached session attributes, the authentication agent applies the cached session attributes for the first session, as authenticated for the host device on the first network interface, for the second session on the second network interface, and starts a fresh authentication for the second session on the second network interface in a background process. If the fresh authentication succeeds, the host device continues to have the continued access to the network. If the fresh authentication fails, the authentication agent terminates the second session on the second network interface so as to deny or otherwise limit the host device access to the network through the second session on the second network interface.

If the authentication agent determines that authentication server authentication of the host device is required for the host on the second network interface to allow the host to access the network-for example, if the authentication agent determines not to use cached session attributes to authenticate the host device on the second network interface-the authentication agent does not allow the host device the continued access to the network until the host device is authenticated with a server group configured on the second network interface. For example, the authentication agent may block or otherwise limit the host device's access to the network. If the authentication using a server group configured on the second network is successful, the authentication agent allows the host device access to the network authentication. If the fresh authentication fails, the authentication agent denies or otherwise limits the host device's access to the network. In one embodiment, the authentication agent terminates the second session on the second network interface so as to deny the host device access to the network through the second session on the second network interface.

It will be understood that while specific embodiments have been presented herein, these embodiments are merely illustrative, and not restrictive. Rather, the description is intended to describe illustrative embodiments, features, and functions in order to provide an understanding of the embodiments without limiting the disclosure to any particularly described embodiment, feature, or function, including any such embodiment, feature, or function described. While specific embodiments of, and examples for, the embodiments are described herein for illustrative purposes only, various equivalent modifications are possible within the spirit and scope of the invention, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments of the invention will be employed without a corresponding use of other features, and features described with respect to one embodiment may be combined with features of other embodiments without departing from the scope and spirit of the disclosure as set forth.

The disclosure in the application also includes the following numbered clauses:
1. A method for authenticating hosts, comprising:
   mapping server groups to target sets of supplicants at a network device that acts as an authenticator for a network, the server groups comprising authentication servers;
   receiving an authentication request at the network device from a supplicant;
   identifying a first server group configured for a first target set of supplicants to which the supplicant belongs; and
   authenticating the supplicant using an authentication server from the first server group.
2. The method of Clause 1, wherein the server groups are RADIUS server groups.
3. The method of Clause 1, wherein authenticating the supplicant using the authentication server from the first server group comprises:
   sending a first authentication message to a first authentication server from the first server group; and
   based on the first authentication server timing out, sending a second authentication message to a second authentication server from the first server group, wherein the second authentication server authenticates the supplicant.
4. The method of Clause 1, wherein the network device comprises network interfaces, wherein mapping the server groups to the target sets of supplicants comprises mapping the server groups to the network interfaces, and wherein the supplicant belongs to the first target set of supplicants by being connected to a first network interface of the network device.
5. The method of Clause 4, wherein the method further comprises:
   detecting that the supplicant has moved to a second network interface of the network device;
   determining to allow the supplicant a continued access to the network without requiring authentication server authentication of the supplicant on the second network interface for the continued access to the network, wherein determining to allow the supplicant the continued access to the network without requiring authentication server authentication of the supplicant on the second network interface for the continued access to the network comprises determining that the first server group is assigned to the second network interface; and
   allowing the supplicant the continued access to the network.
6. The method of Clause 4, wherein the method further comprises:
   detecting that the supplicant has moved to a second network interface of the network device;
   determining that supplicant requires authentication server authentication on the second network interface, wherein determining that supplicant requires authentication server authentication on the second network interface comprises determining that the first server group is not mapped to the second network interface; and
   authenticating the supplicant with a second server group, wherein the second server group is mapped to the second network interface.
7. The method of Clause 1, wherein mapping the server groups to the target sets of supplicants comprises mapping the server groups to virtual local area networks.
8. The method of Clause 1, wherein mapping the server groups to the target sets of supplicants comprises mapping the server groups to device types.
9. A computer program product comprising a non-transitory computer-readable medium storing instructions translatable by a processor of a network device to implement, on the network device, an agent for:
   mapping server groups to target sets of supplicants at the network device;
   receiving an authentication request from a supplicant;
   identifying a first server group configured for a first target set of supplicants to which the supplicant belongs; and
   authenticating the supplicant using an authentication server from the first server group to allow the supplicant an access to a network.
10. The computer program product of Clause 9, wherein the server groups are RADIUS server groups.
11. The computer program product of Clause 9, wherein authenticating the supplicant using the authentication server from the first server group comprises:
   sending a first authentication message to a first authentication server from the first server group; and
   based on the first authentication server timing out, sending a second authentication message to a second authentication server from the first server group, wherein the second authentication server authenticates the supplicant.
12. The computer program product of Clause 9, wherein the network device comprises network interfaces, wherein mapping the server groups to the target sets of supplicants comprises mapping the server groups to the network interfaces, and wherein the supplicant belongs to the first target set of supplicants by being connected to a first network interface of the network device.
13. The computer program product of Clause 12, further comprising instructions translatable by the processor for:
   detecting that the supplicant has moved to a second network interface of the network device;
   determining whether to allow the supplicant a continued access to the network without requiring authentication server authentication on the second network interface for the continued access to the network, wherein determining whether to allow the supplicant continued access to the network without requiring authentication server authentication on the second network interface comprises determining whether the second network interface is configured with the first server group;
   based on a determination to allow the supplicant the continued access to the network without requiring authentication server authentication on the second network interface for the continued access to the network, allowing the supplicant the continued access to the network; and
   based on a determination not to allow the supplicant the continued access to the network without requiring authentication server authentication on the second network interface for the continued access to the network, authenticating the supplicant with a second server group, wherein the second server group is mapped to the second network interface.
14. The computer program product of Clause 9, wherein mapping the server groups to the target sets of supplicants comprises mapping the server groups to virtual local area networks.
15. The computer program product of Clause 9, wherein mapping the server groups to the target sets of supplicants comprises mapping the server groups to device types.
16. A network device comprising:
   a plurality of network interfaces;
   a processor;
   a non-transitory computer readable medium storing instructions translatable by the processor to implement an agent for:
      mapping server groups to target sets of supplicants at the network device;
      receiving an authentication request from a supplicant;
      identifying a first server group configured for a first target set of supplicants to which the supplicant belongs; and
      authenticating the supplicant using an authentication server from the first server group to allow the supplicant an access to a network.
17. The network device of Clause 16, wherein the server groups are RADIUS server groups.
18. The network device of Clause 16, wherein mapping the server groups to the target sets of supplicants comprises mapping the server groups to network interfaces, and wherein the supplicant belongs to the first target set of supplicants by being connected to a first network interface of the network device.
19. The network device of Clause 18, further comprising instructions translatable by the processor for:
   detecting that the supplicant has moved to a second network interface of the network device;
   determining whether to allow the supplicant a continued access to the network without requiring authentication server authentication on the second network interface for the continued access to the network, wherein determining whether to allow the supplicant the continued access to the network without requiring authentication server authentication on the second network interface for the continued access to the network comprises determining whether the first server group is configured on the second network interface;
   based on a determination to allow the supplicant the continued access to the network without requiring authentication server authentication on the second network interface for the continued access to the network, allowing the supplicant the continued access to the network; and
   based on a determination not to allow the supplicant the continued access to the network without requiring authentication server authentication on the second network interface for the continued access to the network, authenticating the supplicant with a second server group, wherein the second server group is mapped to the second network interface.
20. The network device of Clause 16, wherein the mapping server groups to the target sets of supplicants comprises at least one of: mapping the server groups to virtual local area networks or mapping the server groups to device types.

## Claims

1. A method for authenticating hosts, comprising:
mapping server groups to target sets of supplicants at a network device that acts as an authenticator for a network, the server groups comprising authentication servers;
receiving an authentication request at the network device from a supplicant;
identifying a first server group configured for a first target set of supplicants to which the supplicant belongs; and
authenticating the supplicant using an authentication server from the first server group.

2. The method of Claim 1, wherein the server groups are RADIUS server groups.

3. The method of Claim 1 or Claim 2, wherein authenticating the supplicant using the authentication server from the first server group comprises:
sending a first authentication message to a first authentication server from the first server group; and
based on the first authentication server timing out, sending a second authentication message to a second authentication server from the first server group, wherein the second authentication server authenticates the supplicant.

4. The method of any preceding claim, wherein the network device comprises network interfaces, wherein mapping the server groups to the target sets of supplicants comprises mapping the server groups to the network interfaces, and wherein the supplicant belongs to the first target set of supplicants by being connected to a first network interface of the network device.

5. The method of Claim 4, wherein the method further comprises:
detecting that the supplicant has moved to a second network interface of the network device;
determining to allow the supplicant a continued access to the network without requiring authentication server authentication of the supplicant on the second network interface for the continued access to the network, wherein determining to allow the supplicant the continued access to the network without requiring authentication server authentication of the supplicant on the second network interface for the continued access to the network comprises determining that the first server group is assigned to the second network interface; and
allowing the supplicant the continued access to the network.

6. The method of Claim 4, wherein the method further comprises:
detecting that the supplicant has moved to a second network interface of the network device;
determining that supplicant requires authentication server authentication on the second network interface, wherein determining that supplicant requires authentication server authentication on the second network interface comprises determining that the first server group is not mapped to the second network interface; and
authenticating the supplicant with a second server group, wherein the second server group is mapped to the second network interface.

7. The method of Claim 4, wherein the method further comprises:
detecting that the supplicant has moved to a second network interface of the network device;
determining whether to allow the supplicant a continued access to the network without requiring authentication server authentication on the second network interface for the continued access to the network, wherein determining whether to allow the supplicant continued access to the network without requiring authentication server authentication on the second network interface comprises determining whether the second network interface is configured with the first server group;
based on a determination to allow the supplicant the continued access to the network without requiring authentication server authentication on the second network interface for the continued access to the network, allowing the supplicant the continued access to the network; and
based on a determination not to allow the supplicant the continued access to the network without requiring authentication server authentication on the second network interface for the continued access to the network, authenticating the supplicant with a second server group, wherein the second server group is mapped to the second network interface.

8. The method of Claim 4, wherein the method further comprises:
detecting that the supplicant has moved to a second network interface of the network device;
determining whether to allow the supplicant a continued access to the network without requiring authentication server authentication on the second network interface for the continued access to the network, wherein determining whether to allow the supplicant the continued access to the network without requiring authentication server authentication on the second network interface for the continued access to the network comprises determining whether the first server group is configured on the second network interface;
based on a determination to allow the supplicant the continued access to the network without requiring authentication server authentication on the second network interface for the continued access to the network, allowing the supplicant the continued access to the network; and
based on a determination not to allow the supplicant the continued access to the network without requiring authentication server authentication on the second network interface for the continued access to the network, authenticating the supplicant with a second server group, wherein the second server group is mapped to the second network interface.

9. The method of any preceding claim, wherein mapping the server groups to the target sets of supplicants comprises mapping the server groups to virtual local area networks.

10. The method of any preceding claim, wherein mapping the server groups to the target sets of supplicants comprises mapping the server groups to device types.

11. A computer program product comprising a computer-readable medium storing instructions translatable by a processor of a network device that acts as an authenticator for a network, to implement, on the network device a method according to at least one of Claims 1 to 10.

12. A network device configured to perform a method as set out in at least one of claims 1 to 10.
